Europäisches Patentamt

European Patent Office

Office européen des brevets

(19)

(11) Veröffentlichungsnummer : **0 207 182 B1**

(12) **EUROPÄISCHE PATENTSCHRIFT**

(45) Veröffentlichungstag der Patentschrift :
13.12.89

(21) Anmeldenummer : 85108180.2

(22) Anmeldetag : 02.07.85

(51) Int. Cl.⁴ : **B 60 N   1/06**

(54) Drehgelenk für Sitze mit verstellbarer Rückenlehne.

(43) Veröffentlichungstag der Anmeldung :
07.01.87 Patentblatt 87/02

(45) Bekanntmachung des Hinweises auf die Patenterteilung : 13.12.89 Patentblatt 89/50

(84) Benannte Vertragsstaaten :
DE FR GB IT.

(56) Entgegenhaltungen :
EP—A— 0 048 294
DE—A— 1 680 242
FR—A— 2 230 517

(73) Patentinhaber : KEIPER RECARO GmbH & Co.
Büchelstrasse 54-58
D-5630 Remscheid 14 (DE)

(72) Erfinder : Walk, Hansjörg, Ing. grad.
Richard-Wagner-Strasse 34
D-7410 Reutlingen (DE)
Erfinder : Werner, Heinz
Roonstrasse 15
D-5630 Remscheid-Hasten (DE)

(74) Vertreter : Buse, Karl Georg, Dipl.-Phys. et al
Patentanwälte Dipl.-Phys. Buse Dipl.-Phys. Mentzel
Dipl.-Ing. Ludewig Unterdörnen 114
D-5600 Wuppertal 2 (DE)

## Beschreibung

Die Erfindung betrifft ein Drehgelenk für Sitze mit verstellbarer Rückenlehne, bei dem zwei gegeneinander bewegbare Gelenkteile über eine Schwenkachse miteinander verbunden sind und eine die Lage der Gelenkteile zueinander bestimmende, als Getriebe ausgebildete Ver- und Feststelleinrichtung vorgesehen ist, die einen auf der Schwenkachse angeordneten, als Kegelstumpf ausgebildeten Exzenter aufweist, der von einer mit der Neigung des Kegelstumpfes übereinstimmenden, einem Getrieberad zugehörigen Kegelbohrung umgriffen ist und eine Radialverschiebung zwischen beiden Gelenkteilen durch eine von einem Kraftspeicher ausgelöste Axialbewegung zwischen Kegelstumpf und Kegelbohrung erzielbar ist.

Bei einem aus dem EP-A-0 048 294 bekannten Drehgelenk der vorgenannten Art ist der ein Getrieberad der Ver- und Feststelleinrichtung lagernde Exzenter als Kegelstumpf ausgebildet, der in eine passende, kegelige Bohrung des Getrieberades eingreift, welches als in die Innenverzahnung eines Gelenkteiles eingreifendes Stirnrad ausgebildet ist. Dabei ist die den kegelstumpfförmigen Exzenter aufweisende Achse in einer den Innenzahnkranz überbrückenden Scheibe des einen Gelenkteiles und eines damit fest verbundenen Lagerschildes drehbar und axial verschiebbar gegen die Kraft einer Rückstellfeder gelagert. Mit Hilfe dieser Rückstellfeder wird die Schwenkachse während ihrer Drehbewegung und damit der mit ihr fest verbundene Exzenterkonus in axialer Richtung derart bewegt, daß über den Exzenterkonus die Gelenkteile gegeneinander radial verspannt sind, so daß insbesondere bei Stillstand und dann wirksamer Haftreibung das Radialspiel einerseits in der Lagerung und andererseits in der Zahneingriffsstelle eliminiert ist. Durch Drehen der Schwenkachse mittels deren Handhabe stellen sich geringere Gleitreibkräfte ein, so daß die aus der Rückstellfeder wirkende Axialkraft durch eine aus der auf den Exzenter wirkenden, durch den Raialschlag erzeugte höhere Radialkraft resultierenden axialen Kraftkomponente so weit vermindert wird, daß der kegelige Exzenter etwas aus der Kegelbohrung des Getrieberades auswandert, wodurch sich die Stellbewegung erleichtert. Wenn jedoch außer dem Lehnengewicht bei der Rückenlehnenverstellung noch weitere zusätzliche Lasten (z. B. durch den Druck beim Anlehnen des Rückens an die Lehne oder durch deren Verspannung) an der Rückenlehne wirksam sind, wird der Exzenterkonus mit seiner Schwenkachse so weit in axialer Richtung verschoben, bis er in eine Anlageposition gelangt. Dadurch entstehen bei der Verstellung zusätzliche Reibmomente, die den Wirkungsgrad verringern und somit zur Verstellung eine höhere Antriebsleistung erfordern.

Die Aufgabe der vorliegenden Erfindung besteht darin, ein Drehgelenk der eingangs genannten Art dahingehend zu verbessern, daß unter Beibehaltung der Radialspieleliminierung eine Reduzierung des Reibmomentes am kegeligen Exzenter möglich und ein aus Axialkräften resultierendes Reibmoment an einer stirnseitigen Anlagefläche vermieden wird.

Diese Aufgabe ist erfindungsgemäß dadurch gelöst, daß die Schwenkachse neben dem Kegelstumpfexzenter einen Zylinderexzenter aufweist, dessen Exzentrizität etwas kleiner als die Exzentrizität des Kegelstumpfexzenters ist und das Getrieberad mit einer Lageraufnahme auf dem Zylinderexzenter ebenfalls abstützbar ist. Durch die Bildung einer zusätzlichen Lagerstelle — infolge der Verwendung eines Zylinderexzenters neben einem Kegelstumpfexzenter — läßt sich eine über das Lehnengewicht hinausgehende, an der Rückenlehne angreifende und sich als hohe Radialkraft in der Verzahnung äußernde Stützkraft aufnehmen, ohne in zu hohen Axialkräften wirksam zu werden. Die Kombination der kegeligen Lagerung des Getrieberades mit dessen zylindrischer Lagerung erlaubt, daß die in der Verzahnung wirksame Radialkraft bei der Drehbewegung der Schwenkachse den konischen Exzenterbolzen axial verschiebt und dabei gleichzeitig auch radial verlagert, bis die zylindrische Lageraufnahme des Getrieberades auf dem Zylinderexzenter aufsetzt. Jeder weitere, höhere Radialkraftanteil wird dann in der zylindrischen Lagerstelle ohne weitere Axialbewegung der Schwenkachse aufgenommen. Die radiale Lagerverschiebung ist möglich, weil der Zylinderexzenter nur auf der dem Zahneingriff zugekehrten Seite trägt. Auf der Gegenseite des Zylinderexzenters kann deshalb das Lagerspiel um das Maß der radialen Verschiebung unbedenklich zunehmen.

Dabei ist vorteilhaft, daß der Zylinderexzenter einen der Lageraufnahme angepaßten Durchmesser aufweist, der jedoch auf der der Exzentrizität gegenüberliegenden Seite abgeflacht ist. Eine vorteilhafte Ausbildung des Zylinderexzenters wird erhalten, wenn die Abflachung des Zylinderexzenters auf seiner der Exzentrizität gegenüberliegenden Seite von einem Kreisbogen mit größerem Radius als sein halber Durchmesser gebildet ist.

Zur Bildung eines kompakten Drehgelenkes und zwecks einfacher Montage ist nach einem vorteilhaften Ausgestaltungsmerkmal der Erfindung der Kegelstumpfexzenter mit seinem durchmesserkleinen Kreisquerschnitt dem Zylinderexzenter unmittelbar benachbart und weist auf einer Seite einen bündigen Übergang zwischen dem Umfang des Zylinderexzenters und dem ansteigenden Umfang des Kegelexzenters auf, während auf der diametral gegenüberliegenden Seite der durchmesserkleine Kreisquerschnitt des Kegelexzenters den Umfang des Zylinderexzenters überragt. Dabei stehen die Kegelbohrung und die Zylinderbohrung im die Exzenter umgebenden Getrieberad vorteilhaft in fester Zuordnung zueinander und zum Getrieberad. Diese feste Zuordnung läßt sich vorteilhaft erzielen, indem die Kegelbohrung in einer mit dem Getrieberad fest verbundenen Scheibe angeordnet ist. Stattdessen könnte jedoch auch die Kegelbohrung in einem an das Getrieberad angeformten Kragen angeordnet sein.

Statt der vorbeschriebenen Anordnung von Zylinderexzenter und Kegelstumpfexzenter ist jedoch auch eine Ausführungsform denkbar, bei welcher der Kegelstumpfexzenter mit seinem durchmessergroßen Kreisquerschnitt dem Zylinderexzenter unmittelbar benachbart ist, wobei die Neigung des Kegelstumpfexzenters, ausgehend von seinem durchmessergroßen Kreisquerschnitt, vom Zylinderexzenter wegweisend abfallend verläuft. Dabei mag die mit der Kegelbohrung versehene Scheibe vorzugsweise als gegenüber dem Getrieberad separates Bauteil ausgebildet und gegenüber dem Getrieberad in radialer Richtung abgestützt und gegen eine Feder axial verschiebbar gelagert ist. Dabei ist die mit der Kegelbohrung ausgestattete Scheibe vorteilhaft auf mehreren, am Getrieberad festgelegten Zapfen axial verschiebbar, drehmomentübertragend angeordnet und in Richtung auf den ansteigenden Kegelstumpfexzenter von die Zapfen umgreifenden Druckfedern beaufschlagt.

Da im Verstellfall, durch die bei Beginn der Stellbewegung über Axialbewegung erzeugte Radialverschiebung der Gelenkteile zueinander, die Abstützung des exzentrisch gelagerten Getrieberades im wesentlichen auf dem Zylinderexzenter erfolgt, sind dort bei der Belastung der Rückenlehne relativ hohe Reibkräfte wirksam, die ein großes Stellmoment erfordern. Zur Reduzierung dieses Reibmomentes wird nach einem vorteilhaften Ausgestaltungsmerkmal der Erfindung vorgeschlagen, die Lageraufnahme aus einem in das Getrieberad eingesetzten Wälzlager zu bilden.

Dabei ist es vorteilhaft, das Wälzlager in einer in das Getrieberad fest eingesetzten Bundbuchse anzuordnen, die eine den Kegelstumpfexzenter umgreifende Kegelbohrung aufweist. Als Wälzlager mag dabei ein Rollenlager eingesetzt sein, dessen Rollen unmittelbar auf der Mantelfläche des Zylinderexzenters laufen.

Zu Umgehung der drehmomenterhöhenden Axialbewegung ist nach einem weiteren Ausgestaltungsmerkmal der Erfindung der Zylinderexzenter von einem Wälzkörperkranz spielfrei und axial unverschiebbar umgriffen, auf welchem das Getrieberad mit seiner Lageraufnahme abgestützt ist.

Um durch Minderung des Reibwertes Einfluß auf die Ausbildung des Kegelwinkels in konstruktiver Hinsicht nehmen zu können, und zur Verschleißminderung ist nach einem vorteilhaften Ausgestaltungsmerkmal der Erfindung die Kegelbohrung in einem gegebenenfalls in die Scheibe eingesetzten Ring aus Kunststoff, Sintermetall od. dgl. angeordnet.

Bei einer weiteren Ausführungsform der Erfindung ist die mit der Kegelbohrung versehene Scheibe als sich mit ihrem Außenumfang in einem Käfig eines mit dem Getrieberad fest verbundenen Aufnahmeringes abstützende Taumelscheibe ausgebildet, die in Steigungsrichtung des Kegelstumpfexzenters federnd beaufschlagt ist. Dabei mag die Taumelscheibe vorzugsweise von einer Kegelstumpffeder in Richtung auf den Kegelstumpfexzenter beaufschlagt sein.

Statt einer geschlossenen Taumelscheibe läßt sich diese nach einer weiteren Ausführungsform der Erfindung auch durch in Steigungsrichtung des Kegelstumpfexzenters beaufschlagte, an einem Ringvorsprung des Getrieberades oberseitig abgestützte, eigenbewegliche Segmentstütze ersetzen. Dabei kann jedes Segmentstück vorteilhaft auf einem am Getrieberad angeordneten Kopfbolzen axialverschiebbar und schwenkbar gehaltert und von einer sich einerseits am Kopf des Kopfbolzens und andererseits am Segmentstück abstützenden Druckfeder in Steigungsrichtung des Kegelstumpfexzenters beaufschlagt sein.

Die Erfindung ist in Ausführungsbeispielen auf der Zeichnung dargestellt und wird nachfolgend näher erläutert. Es zeigen :

Fig. 1 ein erfindungsgemäßes Drehgelenk zur Verwendung zwischen Sitz und Rückenlehne eines Fahrzeugsitzes in einer Seitenansicht auf den mittleren Teil des Drehgelenkes bei abgenommener Handhabe,

Fig. 2 das aus Fig. 1 ersichtliche Drehgelenk in einem Längsschnitt nach der Linie II-II von Fig. 1, während des Stellvorganges,

Fig. 3 das aus Fig. 2 ersichtliche Drehgelenk, ebenfalls im Längsschnitt nach der Linie II-II von Fig. 1, in seiner Ruhelage,

Fig. 4 eine weitere Ausführungsform eines Drehgelenkes in einem Vertikalschnitt in Ruhelage dargestellt, bei welchem sich die Kegelbohrung in einem an das Getrieberad angeformten Kragen befindet,

Fig. 5 ein weiteres Ausführungsbeispiel eines Drehgelenkes, bei welchem im Gegensatz zu den vorhergehenden Ausführungsbeispielen eine die Kegelbohrung aufweisende Scheibe axial verschiebbar ist,

Fig. 6 ein weiteres Ausführungsbeispiel eines Drehgelenkes analog Fig. 2, bei dem jedoch das Getrieberad mittels eines Wälzlagers auf dem Zylinderexzenter gelagert ist,

Fig. 7 ein weiteres Ausführungsbeispiel eines Drehgelenkes analog Fig. 6, bei dem das Wälzlager jedoch fester Bestandteil des Zylinderexzenters ist,

Fig. 8 ein Ausführungsbeispiel analog den Fig. 2 bis 4, bei dem in die mit dem Getrieberad verbundene Scheibe ein Ring aus Kunststoff, Sintermetall od. dgl. eingesetzt ist,

Fig. 9 ebenfalls ein aus den Fig. 2 bis 4 analoges Ausführungsbeispiel, bei dem jedoch die Federscheibe in einem von der Stützschale gebildeten, gehäuseartigen Lagerkopf angeordnet ist,

Fig. 10 ein Ausführungsbeispiel eines Drehgelenkes, bei dem eine den Konusexzenter umgreifende, federbelastete Stützscheibe in einem Stützkäfig des Getrieberades angeordnet ist,

Fig. 11 ein mit Fig. 10 etwa übereinstimmendes Ausführungsbeispiel eines Drehgelenkes, bei dem jedoch im Unterschied dazu die Stützscheibe in Segmentstücke aufgeteilt ist,

Fig. 12 das aus Fig. 11 ersichtliche Drehgelenk in einerim Schnitt nach der Linie XII-XII dargestellten Seitenansicht,

Fig.13 ein der Ausführungsform gemäß Fig. 11 etwa entsprechendes Drehgelenk, bei dem jedoch im Unterschied dazu jedem Segmentstück eine eigene Druckfeder zugeordnet ist, die je einem am Getrieberad festgelegten, jedem Segmentstück zugeordneten Kopfbolzen umfaßt.

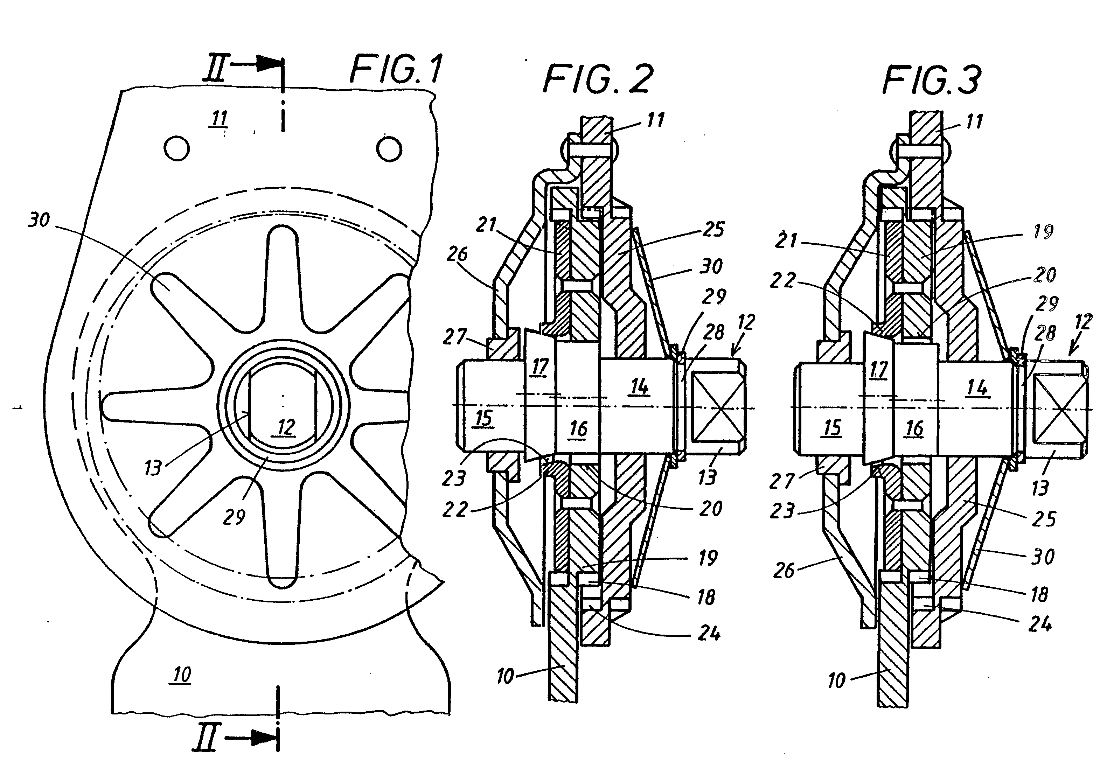

Das erfindungsgemäße Drehgelenk ist an Ausführungsbeispielen von für Kraftfahrzeugsitze geeigneten Gelenkbeschlägen erläutert. Dabei weisen die aus den Fig. ersichtlichen Drehgelenke jeweils einen dem Sitzteil eines Kraftfahrzeugsitzes zugeordneten festen Gelenkteil 10 und einen an der Rückenlehne zu befestigenden schwenkbaren Gelenkteil 11 auf. Die Gelenkteile 10 und 11 sind über eine Schwenkachse 12 drehgelenkig miteinander verbunden. Die Schwenkachse 12 weist außer einem, mit beispielsweise Anflachungen versehenen Mitnehmerabschnitt 13 zwei zentrische Abschnitte 14 und 15 auf, zwischen denen ein Zylinderexzenter 16 und ein Kegelstumpfexzenter 17 angeordnet sind. Dabei ist die Exzentrizität des Kegelstumpfexzenters 17 gegenüber den zentrischen Abschnitten 14 und 15 etwas größer als die Exzentrizität des Zylinderexzenters 16 gegenüber den zentrischen Abschnitten 14 und 15. Bei allen Ausführungsbeispielen schließt der Kegelstumpfexzenter 17 unmittelbar an den Zylinderexzenter 16 an. Bei den aus den Fig. 2 bis 4 und 8 bis 9 ersichtlichen Ausführungsbeispielen geht der durchmesserkleinere Kreisquerschnitt des Kegelstumpfexzenters 17 unmittelbar in den Zylinderexzenter 16 über, und zwar derart, daß auf der dem Exzentermaß gegenüberliegenden Seite ein bündiger Übergang im Umfangsbereich zwischen dem Zylinderexzenter 16 und dem Kegelstumpfexzenter 17 erfolgt. Auf der diametral gegenüberliegenden Seite ist zwischen dem Zylinderexzenter 16 und dem Kegelstumpfexzenter 17 ein Absatz vorhanden, welcher der doppelten Exzenterdifferenz zwischen dem Zylinderexzenter 16 und dem Kegelstumpf 17 entspricht. Bei den vorgenannten Ausführungsbeispielen steigt die Neigung des Kegelstumpfexzenters 17, ausgehend vom Zylinderexzenter 16, an.

Die aus den Fig. 2 und 3 sowie 8 bis 13 ersichtlichen Ausführungen weisen eine mit einer Außenverzahnung 18 versehene, ein Stirnrad 19 bildende Ausdrückung auf, in der eine den Zylinderexzenter 16 umfassende, eine Lageraufnahme bildende Bohrung 20 angeordnet ist, deren Durchmesser dem Durchmesser des Zylinderexzenters 16 entspricht, der jedoch auf der der Exzentrizität gegenüberliegenden Seite durch einen Kreisbogen mit größerem Radius als sein halber Durchmesser abgeflacht ist. Mit der Ausdrückung 19 ist bei den Ausführungen nach Fig. 2 und 3 sowie 8 und 9 eine Scheibe 21 fest verbunden, deren aus den Fig. 2, 3 und 9 ersichtlicher, zentrisch angeordneter Kragen 22 eine den Kegelstumpfexzenter 17 mit Spiel umgreifende Kegelbohrung 23 aufweist.

Die Außenverzahnung 18 der Ausdrückung 19 des Gelenkteiles 10 greift in eine Innenverzahnung 24 des mit der Rückenlehne verbindbaren Gelenkteiles 11 ein, dessen die Innenverzahnung 24 überbrückende Stützscheibe 25 auf dem zentrischen Abschnitt 14 der Schwenkachse 12 im wesentlichen spielfrei gelagert ist. Mit dem schwenkbaren Gelenkteil 11 ist ein Lagerschild 26 fest verbunden, das einerseits auf dem zentrischen Abschnitt 15 der Schwenkachse 12, gegebenenfalls unter Zwischenschaltung einer Lagerbuchse 27, im wesentlichen spielfrei abgestützt ist und andererseits der axial unverrückbaren Halterung des das Stirnrad 19 aufweisenden Gelenkteiles 10 am Gelenkteil 11 dient. Die Zähnezahl der Außenverzahnung 18 des Stirnrades 19 ist um wenigstens einen Zahn geringer als die Zähnezahl der Innenverzahnung 24 des Gelenkteiles 11. Dabei ist der Kopfkreisdurchmesser des Stirnrades 19 um wenigstens eine Zahnhöhe kleiner als der Fußkreisdurchmesser der Innenverzahnung 24. Die Exzentrizität des Zylinderexzenters 16 gegenüber den zylindrischen Abschitten 14 und 15 entspricht der Differenz zwischen dem Fußkreisradius der Innenverzahnung 24 und dem Kopfkreisradius des Stirnrades 19. Die Exzentrizität des Kegelstumpfexzenters 17 gegenüber den zentrischen Abschnitten 14 und 15 ist geringfügig größer als die Exzentrizität des Zylinderexzenters 16. Im Übergangsbereich des zentrischen Abschnitts 14 zum Mitnehmerabschnitt 13 ist eine Ringnut 28 angeordnet, die einen Sicherungsring 29 aufnimmt, an dem über einen Druckring eine Federscheibe 30 einerseits anliegt, die sich andererseits an der Stützscheibe 25 des Gelenkteiles 11 abstützt. Diese Federscheibe 30 mag — wie aus Fig. 1 zu entnehmen ist — mehrere gleichmäßig am Umfang verteilte Federfinger aufweisen.

Bei der Einleitung einer Drehbewegung in die Schwenkachse 12 eines Gelenkbeschlages gemäß den Ausführungsbeispielen nach den Fig. 2 bis 4 und 8 bis 9 wird die Schwenkachse 12 infolge des fertigungsbedingten Radialschlages einerseits und der Radialkraft in der Verzahnung andererseits in axialer Richtung — bei großer Radialkraft gegen die Kraft der Federscheibe 30 — verlagert. Die den Gegebenheiten angepaßte axiale Verlagerung der Schwenkachse 12 erlaubt radiale Ausweichbewgungen im positiven und auch negativen Sinn, so daß eine von Zwangskräften freie Verstellbewegung bei im wesentlichen Spielfreiheit möglich ist.

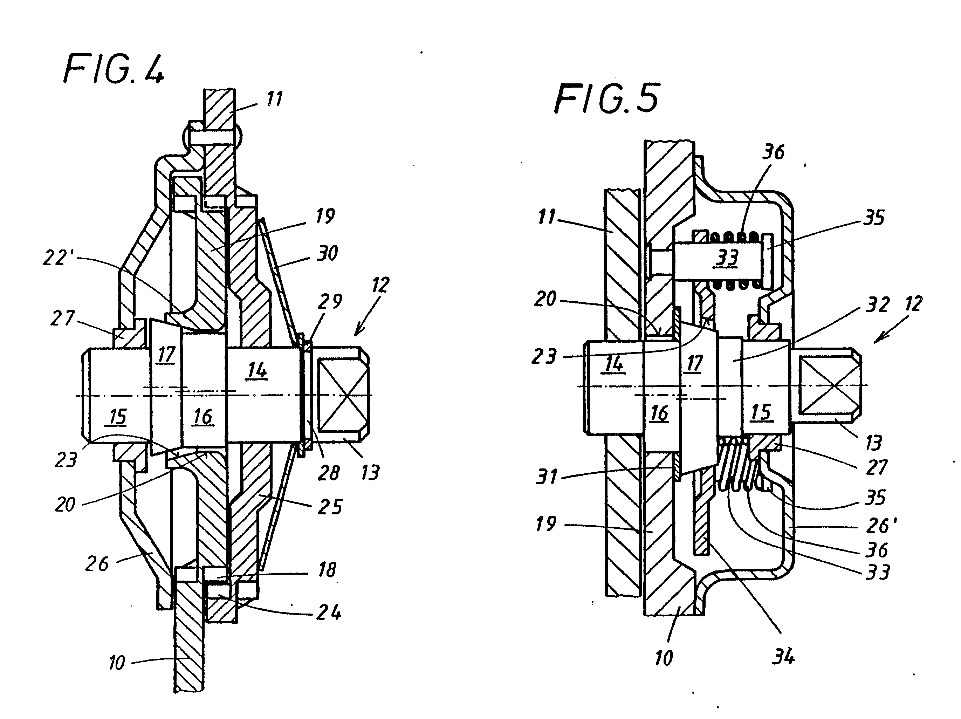

Sobald jedoch bei Unterlassung der Drehbewegung an der Schwenkachse 12 auch die Gleitreibung durch die Haftreibung ersetzt wird, bleibt der jeweils gerade vorhandene spielfreie Stellzustand erhalten, weil der Kegelwinkel so gewählt wurde, daß dieser dann im Selbsthemmungsbereich liegt, so daß eine Verstellung durch äußere Krafteinwirkung auf die Rückenlehne nicht erfolgt. Erst bei erneuter Drehung der Schwenkachse 12 und bei geringerer Gleitreibung kann eine Verstellung erfolgen. In den Fig. 2 und 3 sind die Ausführungsformen identisch, während unterschiedliche, sich aus dem Radialschlag ergebende Istzustände dargestellt sind.

Das aus Fig. 4 ersichtliche Ausführungsbeispiel entspricht im Aufbau und in der Wirkungsweise im wesentlichen dem aus den Fig. 2 und 3 ersichtlichen Ausführungsbeispiel. Unterschiedlich dazu ist jedoch, daß statt der mit dem Stirnrad 19 verbundenen Scheibe ein Kragen 22' unmittelbar an die das Stirnrad bildende Ausdrückung 19 angeformt ist und dieser Kragen mit der Kegelbohrung 23 versehen ist, an die sich in einer Ebene mit der Außenverzahnung liegend die Zylinderbohrung 20 anschließt.

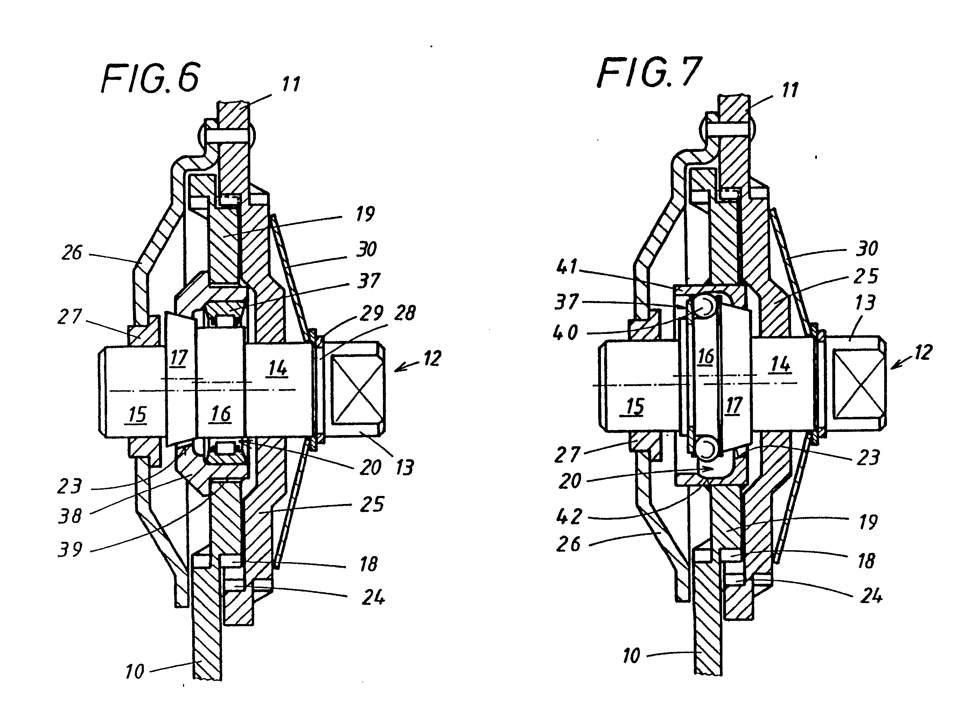

Bei dem aus Fig. 5 ersichtlichen Ausführungsbeispiel ist lediglich der zentrale Bereich des Drehgelenkes dargestellt, wobei die Außenverzahnung und die Innenverzahnung analog den vorhergehenden Beispielen an den Gelenkteilen 10 und 11 angeordnet sind. Der die Außenverzahnung aufweisende Gelenkteil 10 umfaßt mit seiner die Lageraufnahme bildenden Bohrung 20 mit Spiel den Zylinderexzenter 16. Der sich an diesen Zylinderexzenter anschließende Kegelstumpfexzenter 17 weist an seiner dem Zylinderexzenter zugekehrten Seite den durchmessergrößten Kreisquerschnitt auf, so daß ein Absatz zwischen dem Zylinderexzenter 16 und dem Kegelstumpfexzenter 17 gebildet wird. Mit diesem Absatz liegt der Kegelstumpfexzenter 17 über eine Druckscheibe 31 an der Seitenwandung des festen Gelenkteiles 10 an. An den Kegelstumpfexzenter 17 schließt sich auf der dem Zylinderexzenter 16 gegenüberliegenden Seite ein Distanzabschnitt 32 an, dessen Absatz in axialer Richtung an der Lagerbuchse 27 des mit dem Gelenkteil 11 verbundenen, topfförmigen Lagerschildes 26' anliegt. Dieser Lagerschild 26' stützt sich auf dem zentrischen Abschnitt 15 der Schwenkachse 12 ab, während das mit dem Lagerschild 26' verbundene Gelenkteil 11 auf dem zentrischen Abschnitt 14 der Schwenkachse 12 gelagert ist. In der vorbeschriebenen Weise ist die Schwenkachse 12 in axialer Richtung unverrückbar im Drehgelenk gehalten und kann lediglich eine Drehbewegung ausführen. Damit jedoch eine Radialverschiebung zwischen den Gelenkteilen 10 und 11 zur Eliminierung des Radialspieles stattfinden kann, sind am Gelenkteil 10 auf äquidistantem Mittelpunktsabstand drei Kopfbolzen 33, beispielsweise durch Nieten, befestigt. Diese Kopfbolzen dienen der axial verschiebbaren, jedoch in Beziehung auf den Gelenkteil 10 drehmitnahmegesicherten Halterung einer Scheibe 34, die eine zentrische, den Kegelstumpfexzenter 17 mit Spiel umfassende Kegelbohrung 23 aufweist. Dabei stimmt das Zentrum der Kegelbohrung 23 mit dem Zentrum der Zylinderbohrung 20 überein. Die Kopfbolzen 33 sind zwischen ihrem Kopf 35 und der Scheibe 34 von jeweils einer Druckfeder 36 umfaßt, durch welche die Scheibe 34 in Anlage am Kegelstumpfexzenter 17 gehalten ist. Die Funktionsweise dieser Ausführungsform entspricht sinngemäß derjenigen der vorgenannten Ausführungsbeispiele mit dem Unterschied, daß die Schwenkachse keine Axialbewegung durchführt, sondern dann, wenn an der Schwenkachse keine Drehbewegung stattfindet, und damit die axiale Kraftkomponente des Kegelstumpfexzenters 17 aus der gleitenden Reibung entfällt, die Druckfedern 36 in der Lage sind, die Scheibe 34 so weit nach links auf den Kegelstumpfexzenter 17 aufzudrücken, daß dadurch die Gelenkteile 10 und 11 in radialer Richtung zur Radialspieleliminierung verspannt werden.

Das aus Fig. 6 ersichtliche Ausführungsbeispiel entspricht in wesentlichen Teilen seines Aufbaues und seiner Funktionsweise den aus den Fig. 2 und 3 sowie aus Fig. 4 ersichtlichen Ausführungsbeispielen. Unterschiedlich dazu ist die Maßnahme, die Lageraufnahme in der das Stirnrad bildenden Ausdrückung 19 durch ein Wälzlager 37 zu bilden. Zu diesem Zweck ist in die Ausdrückung 19 eine Bundbuchse 38 fest eingesetzt, was beispielsweise durch einen Preßsitz, eine Kerbverzahnung 39 od. dgl. geschehen kann. Im vorliegenden Fall ist in die Bundbuchse 38 ein das Wälzlager 37 bildendes Rollenlager fest eingesetzt, dessen Rollen in einem Lagerkäfig gehalten sind und mit dem Umfang des Zylinderexzenters 16 unmittelbar in Berührung kommen können. Dabei ist der Durchmesser des Zylinderexzenters um den Betrag des möglichen Spielausgleichs abgeflacht, wie dies bereits oben beschrieben wurde. In einem seitlich neben dem Wälzlager 37 nach innen vorragenden Kragen der Bundbuchse 38 ist die dem Kegelstumpfexzenter zugeordnete Kegelbohrung 23 angeordnet, deren Zentrum mit dem Zentrum des Wälzlagers übereinstimmt. Durch diese Ausbildung ist eine Reduzierung des Stellmomentes möglich, weil die über das Lehnengewicht hinausgehende Radialkraft in der Verzahnung durch das Wälzlager aufgenommen werden kann. Durch den bei der Verstellbewegung in der Verzahnung anfallenden Druck ist die Schwenkachse 12 in axialer Richtung verschoben, wodurch die Lagerung des Stirnrades 19 in radialer Richtung so weit verschoben ist, bis sich das Wälzlager 37 auf den zylindrischen Teil des Exzenterbolzens in Exzenterrichtung abstützt. Damit werden die Stützkräfte vom Wälzlager 37 aufgenommen. Die radiale Verschiebung im Wälzlager 37 ist deshalb möglich, weil der Zylinderexzenter 16 nur auf der dem Zahneingriff zugewandten Oberfläche des Zylinderexzenters 16 zu Anlage kommt. Da der Zylinderexzenter 16 und der Kegelstumpfexzenter 17 etwas exzentrisch zueinander angeordnet sind, verschiebt sich der Exzenterbolzen zu Beginn jeder erneuten Drehbewegung, so daß jedesmal bei der Verstellbewegung eine leichtgängige Verstellung möglich ist, während zwischen den Bewegungsphasen das Radialspiel durch Rückstellung der Schwenkachse jedesmal erneut eliminiert ist.

Bei dem aus Fig. 7 ersichtlichen Ausführungsbeispiel eines Drehgelenkes handelt es sich um eine Ausführungsform, bei welcher ebenfalls zwischen dem Zylinderexzenter 16 und der Lageraufnahme 20 ein Wälzlager 37 eingesetzt ist. Im Unterschied zu dem aus Fig. 6 ersichtlichen Ausführungsbeispiel ist bei der Ausführungsform des Drehgelenkes gemäß Fig. 7 der Zylinderexzenter 16 zur Bildung eines Wälzlagers von einem Walzkörperkranz 40 spielfrei und axial unverschiebbar umgriffen. Als Lageraufnahme 20 dient ein in das Stirnrad 19 eingesetzter Lagerring 41, der einerseits eine den Kegelstumpfexzenter 17 mit Spiel umfassende Kegelbohrung 23 aufweist und andererseits mit einer eine Axialverschiebung der Schwenkachse 12 ermöglichenden Laufrille 41 umgriffen ist, deren Lauffflächendurchmesser größer ist als der Außendurchmesser des Wälzkörperkranzes 42. Auch bei dieser Ausführungsform wird eine leichtgängige Stellbewegung erzielt, wobei in Fig. 7 der Zustand der Stellbewegung dargestellt ist. Bei Unterbrechung dieser Stellbewegung verbleibt der Exzenterbolzen und somit auch der Zahneingriff in der gerade eingenommenen spielfreien Lage und wird auch in dieser gestützt.

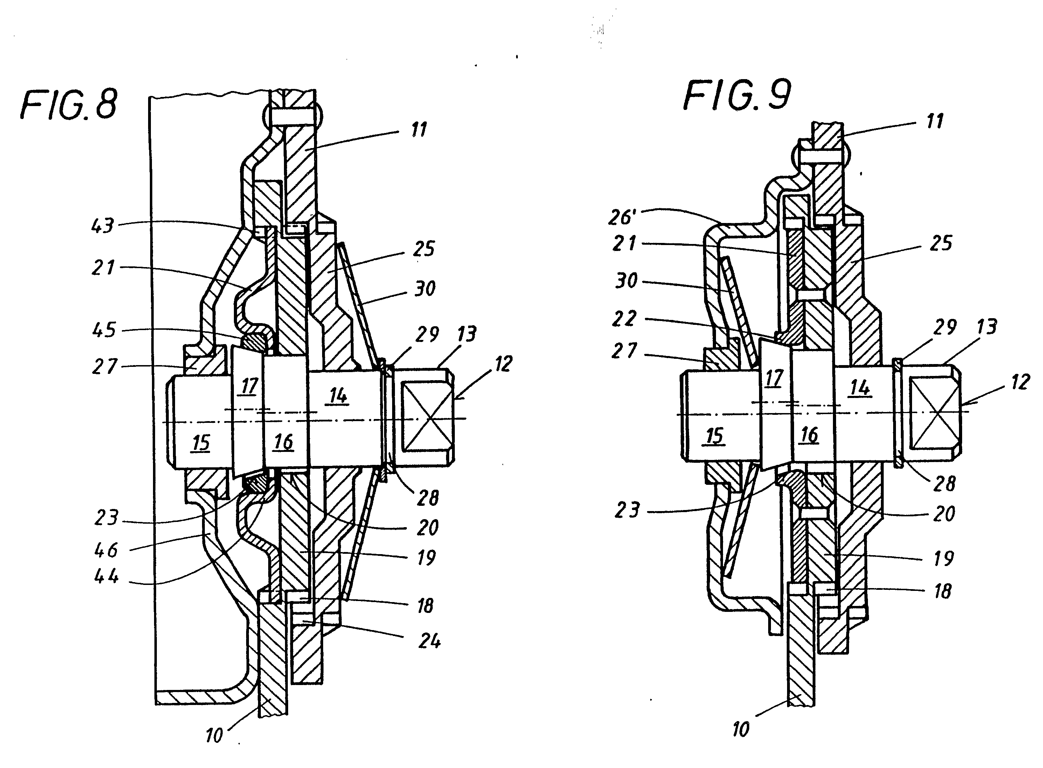

Die aus den Fig. 8 und 9 ersichtlichen Ausführungsbeispiele entsprechen in Wirkungsweise und Aufbau im wesentlichen dem aus den Fig. 2 und 3 ersichtlichen Ausführungsbeispiel. Im Unterschied dazu besteht jedoch bei der Ausführung gemäß Fig. 8 die Scheibe 21 aus einem dünnwandigen Preßformteil, das an seinem Außenumfang mit einer Zahnung versehen ist, die in eine bei der Verzahnung 18 des Stirnrades 19 entstehende Gegenzahnung 43 zur Festlegung der Scheibe 21 am Getrieberad 19 eingreift. Zentrisch zur Gegenverzahnung 43 ist die aus Fig. 8 ersichtliche Scheibe 21 mit einem Lagerkragen 44 versehen, in welchen ein Lagerring 45 mit der den Kegelstumpfexzenter 17 umgreifenden Kegelbohrung 23 eingesetzt ist. Dieser Lagerring 45 besteht vorteilhaft zur Auswahl spezieller Reibwerte aus einem Kunststoff, Sintermetall od. dgl. Allerdings ist es auch denkbar, die gesamte Scheibe 21 aus einem derartigen Werkstoff zu fertigen. In weiterer Unterscheidung zu den bisher beschriebenen Ausführungsformen ist bei dem in Fig. 8 dargestellten Drehgelenk statt eines Lagerschildes das untere Ende des Seitenholmes 46 des Rückenlehnenrahmens als Lagerschild hergerichtet und mit dem schwenkbaren Gelenkteil 11, wie angedeutet, durch beispielsweise Niete fest verbunden.

Bei dem aus Fig. 9 dargestellten Ausführungsbeispiel ist der Lagerschild 26' topfförmig gestaltet und dient außer der Abstützung auf dem zentrischen Abschnitt 15 der Schwenkachse 12 zusätzlich noch dazu, die Federscheibe 30 aufzunehmen, die sich einerseits am Kegelstumpfexzenter 17 und andererseits an der Stützwandung des Lagerschildes 26' abstützt. Bei diesem Ausführungsbeispiel dient der Sicherungsring 29 am Ende des zentrischen Abschnittes 14 der Schwenkachse 12 dazu, die Axialbewegung der Schwenkachse in einer Richtung zu begrenzen.

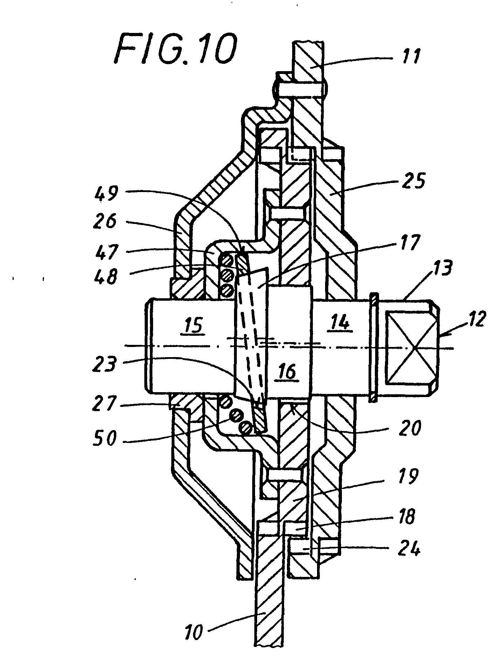

Bei dem aus Fig. 10 ersichtlichen Ausführungsbeispiel ist die bei den Ausführungen gemäß den Fig. 2, 3 und 9 mit dem Stirnrad 19 verbundene Stützscheibe 21 als topfförmiger, den Kegelstumpfexzenter mit Abstand umrundender Aufnahmering 47 ausgebildet, der ebenfalls fest mit dem Getrieberad 19, beispielsweise über Senkkopfniete, verbunden ist. Zwischen dem Innenmantel des Aufnahmeringes 47 und dem Außenmantel des Kegelstumpfexzenters 17 ist eine Taumelscheibe 48 angeordnet, die sich mit ihrem Außenumfang 49 am Aufnahmering 47 und mit ihrer Kegelbohrung 23 bereichsweise auf dem Kegelstumpfexzenter 17 der Schwenkachse 12 abstützt. In axialer Richtung ist die Taumelscheibe 48 durch eine sich einerseits am Kragen des Aufnahmeringes 47 abstützende und andererseits an der Taumelscheibe 48 anliegende Kegelstumpffeder 50 in Richtung auf den Kegelstumpfexzenter 17 beaufschlagt.

Bei dieser Ausführungsform wird die durch den Radialschlag in der Verzahnung 18, 24 verursachte Radialkraft über den Aufnahmering 47 und die Taumelscheibe 48 auf den Kegelstumpfexzenter 17 übertragen, der je nach Belastung durch die Radialkraft mit einer axialen Kraftkomponente je nach deren Größe entweder gegen die Kraft der Kegelstumpffeder 50 oder durch die Kegelstumpffeder 50 in axialer Richtung verschoben wird, so daß bei jeder Bewegungsphase eine solche Einstellung der Bauteile zueinander erzielt wird, daß das Radialspiel eliminiert ist. Wohlgemerkt findet eine derartige Axialverschiebung der Schwenkachse 12 nur während der Verstellbewegung statt, da die Gleitreibung geringer ist als die Haftreibung und der Kegelwinkel des Kegelstumpfexzenters 17 so gewählt ist, daß er einem Wert zwischen der Haftreibung und der Gleitreibung entspricht. Dadurch herrscht in diesem System bei Stillstand der Schwenkachse 12 ebenfalls Selbsthemmung, so daß der bei der jeweils unterbrochenen Stellbewegung erzielte Ruhezustand aufrechterhalten bleibt, so daß auf die Rückenlehne einwirkende äußere Kräfte nicht zu einer weiteren Verstellung des Drehgelenkes führen können.

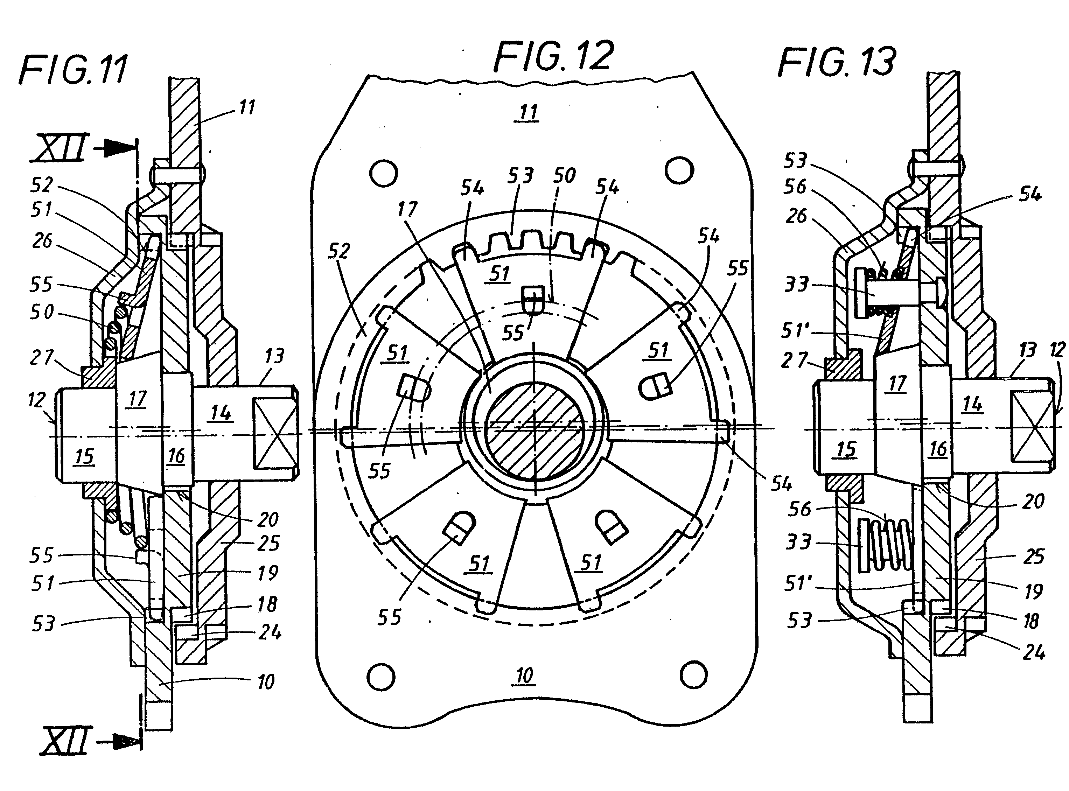

Die aus den Fig. 11 bis 13 ersichtlichen Ausführungsformen entsprechen in ihrer Wirkungsweise den vorgenannten Ausführungen und sind auch in ihrem Aufbau vom Prinzip her mit den vorgenannten Ausführungen bis auf geringe Unterschiede identisch. Der wesentliche Unterschied der beiden Ausführungsformen gemäß den Fig. 11 bis 13 besteht im wesentlichen darin, daß die mit dem Stirnrad 19 verbundene, sich auf dem Kegelstumpfexzenter 17 abstützende Scheibe aus einzelnen Segmentstücken 51 gebildet ist. Bei den aus den Fig. 11 und 13 ersichtlichen Ausführungsbeispielen wird der Kegelstumpfexzenter 17 von 5 am Umfang gleichmäßig verteilt angeordneten Segmentstücken 51 umfaßt, die sich oberendig an einem Ringvorsprung 52 des Getrieberades 19 abstützen. Dieser Ringvorsprung 52 des Getrieberades 19 weist eine durch das Auspressen der Verzahnung 18 gebildete Gegenzahnung 53 auf, in welche am Außenumfang der Segmentstücke 51 angeordnete Vorsprünge 54 lagesichernd eingreifen. Bei dem aus dem Fig. 11 und 12 ersichtlichen Ausführungsbeispiel werden die Segmentstücke 51 durch eine Kegelstumpffeder 50 in Richtung auf den Kegelstumpfexzenter 17 beaufschlagt. Dabei stützt sich diese Kegelstumpffeder einerseits am Lagerschild 26 und andererseits an aus den Segmentstücken 51 ausgebogenen Stützlappen 55 eines jeden Segmentstückes 51 ab. Bei dem aus Fig. 13 ersichtlichen Ausführungsbeispiel ist im Unterschied zu der aus Fig. 11 ersichtlichen Ausführungsform jedem Segmentstück 51' ein eigenes Federglied, beispielsweise in Form einer Schraubendruckfeder 56, zugeordnet. Diese Schraubendruckfeder 56 umfaßt einen Kopfbolzen 33, von dem eine mit der Anzahl der Segmentstücke 51' übereinstimmende Anzahl gleichmäßig über den Umfang verteilt am Stirnrad 19 befestigt ist. Jeder dieser Kopfbolzen 33 durchdringt einen Durchbruch im Segmentstück 51', welches durch diesen Durchbruch geführt und durch die Schraubendruckfeder 56 veranlaßt ist, mit seiner Unterseite auf der Oberfläche des Kegelstumpfexzenters 17 anzuliegen, während sich die Vorsprünge 54, wie bei der Ausführungsform gemäß den Fig. 11 und 12, in der Gegenverzahnung 53 des Stirnrades 19 abstützen.

Infolge der durch den Radialschlag verursachten und auf die Segmentstücke übertragenen Radialkraft fällt an jedem Segmentstück 51 bzw. 51' durch die Wirkung auf den Kegelstumpfexzenter 17 eine mehr oder weniger starke Axialkraft an, durch welche die Segmentstücke 51 zur radialen Verschiebung der Gelenkteile 10 und 11 gegeneinander mehr oder weniger stark in eine Schrägstellung wandern, wies dies aus den Fig. 11 und 13 ersichtlich ist.

Bezugszeichenliste

10 Gelenkteil, fest
11 Gelenkteil, schwenkbar
12 Schwenkachse
13 Mitnehmerabschnitt
14 Abschnitt, zentrisch
15 Abschnitt, zentrisch
16 Zylinderexzenter
17 Kegelstumpfexzenter
18 Außenverzahnung
19 Ausdrückung/Stirnrad
20 Lageraufnahme/Bohrung
21 Scheibe
22 Kragen an 21
22' Kragen an 19
23 Kegelbohrung
24 Innenverzahnung
25 Stützscheibe
26 Lagerschild
26' Lagerschild
27 Lagerbuchse
28 Ringnut
29 Sicherungsring
30 Federscheibe
31 Druckscheibe
32 Distanzabschnitt
33 Kopfbolzen
34 Scheibe
35 Kopf von 33
36 Druckfeder
37 Wälzlager
38 Bundbuchse

39 Kerbverzahnung
40 Wälzkörperkranz
41 Lagerring
42 Laufrille
43 Gegenverzahnung
44 Lagerkragen
45 Lagerring
46 Seitenholm
47 Aufnahmering
48 Taumelscheibe
49 Außenumfang
50 Kegelstumpffeder
51 Segmentstück
51' Segmentstück
52 Ringvorsprung
53 Gegenzahnung
54 Vorsprung
55 Stützlappen
56 Schraubendruckfeder

## Patentansprüche

1. Drehgelenk für Sitze mit verstellbarer Rückenlehne, bei dem zwei gegeneinander bewegbare Gelenkteile (10, 11) über eine Schwenkachse (12) miteinander verbunden sind und eine die Lage der Gelenkteile zueinander bestimmende, als Getriebe ausgebildete Ver- und Feststelleinrichtung vorgesehen ist, die einen auf der Schwenkachse (12) angeordneten, als Kegelstumpf ausgebildeten Exzenter (17) aufweist, der von einer mit der Neigung des Kegelstumpfes übereinstimmenden, einem Getrieberad (19) zugehörigen Kegelbohrung (23) umgriffen ist und eine Radialverschiebung zwischen beiden Gelenkteilen (10, 11) durch eine von einem Kraftspeicher (30) ausgelöste Axialbewegung zwischen Kegelstumpf (17) und Kegelbohrung (23) erzielbar ist, dadurch gekennzeichnet, daß die Schwenkachse (12) neben dem Kegelstumpfexzenter (17) einen Zylinderexzenter (16) aufweist, dessen Exzentrizität etwas kleiner als die Exzentrizität des Kegelstumpfexzenters (17) ist und das Getrieberad (19) mit einer Lageraufnahme (20) auf dem Zylinderexzenter (16) ebenfalls abstützbar ist.

2. Drehgelenk nach Anspruch 1, dadurch gekennzeichnet, daß der Zylinderexzenter (16) einen der Lageraufnahme (20) angepaßten Durchmesser aufweist, der jedoch auf der der Exzentrizität gegenüberliegenden Seite abgeflacht ist.

3. Drehgelenk nach Anspruch 1 und/oder 2, dadurch gekennzeichnet, daß die Abflachung des Zylinderexzenters (16) auf seiner der Exzentrizität gegenüberliegenden Seite von einem Kreisbogen mit größerem Radius als sein halber Durchmesser gebildet ist.

4. Drehgelenk nach einem oder mehreren der vorhergehenden Ansprüche, dadurch gekennzeichnet, daß der Kegelstumpfexzenter (17) mit seinem durchmesserkleinen Kreisquerschnitt dem Zylinderexzenter (16) unmittelbar benachbart ist und auf einer Seite einen bündigen Übergang zwischen dem Umfang des Zylinderexzenters (16) und dem ansteigenden Umfang des Kegelstumpfexzenters (17) aufweist, während auf der diametral gegenüberliegenden Seite der durchmesserkleine Kreisquerschnitt des Kegelstumpfexzenters (17) den Umfang des Zylinderexzenters (16) überragt.

5. Drehgelenk nach einem oder mehreren der vorhergehenden Ansprüche, dadurch gekennzeichnet, daß die Kegelbohrung (23) und die als Zylinderbohrung (20) ausgebildete Lageraufnahme im die Exzenter (16, 17) umgebenden Getrieberad (19) in fester Zuordnung zueinander und zum Getrieberad (19) stehen.

6. Drehgelenk nach Anspruch 5, dadurch gekennzeichnet, daß die Kegelbohrung (23) in einer mit dem die Zylinderbohrung (20) aufweisenden Getrieberad (19) fest verbundenen Scheibe (21) angeordnet ist.

7. Drehgelenk nach Anspruch 5, dadurch gekennzeichnet, daß die Kegelbohrung (23) in einem an das Getrieberad (19) angeformten, die Zylinderbohrung fortsetzenden Kragen (22') angeordnet ist.

8. Drehgelenk nach Ansprüchen 1 bis 3, dadurch gekennzeichnet, daß der Kegelstumpfexzenter (17) mit seinem durchmessergroßen Kreisquerschnitt dem Zylinderexzenter (16) unmittelbar benachbart ist, wobei die Neigung des Kegelstumpfexzenter (17), ausgehend von seinem durchmessergroßen Kreisquerschnitt vom Zylinderexzenter (16) wegweisend abfallend verläuft.

9. Drehgelenk nach Anspruch 1 und/oder Anspruch 8, dadurch gekennzeichnet, daß die mit der Kegelbohrung (23) versehene Scheibe (34) als gegenüber dem Getrieberad (19) separates Bauteil ausgebildet, die gegenüber dem Getrieberad (19) in radialer Richtung abgestützt und gegen eine Feder (36) axial verschiebbar gelagert ist.

10. Drehgelenk nach Anspruch 9, dadurch gekennzeichnet, daß die mit der Kegelbohrung (23) ausgestattete Scheibe (34) auf mehreren am Getrieberad (19) festgelegten Kopfbolzen (33) axial verschiebbar, drehmomentübertragend angeordnet und in Richtung auf den ansteigenden Kegelstumpfexzenter (17) von die Kegelbolzen (33) umgreifenden Druckfedern (36) beaufschlagt ist.

11. Drehgelenk nach einem oder mehreren der Ansprüche 1 bis 3, dadurch gekennzeichnet, daß die Lageraufnahme (20) aus einem in das Getrieberad (19) eingesetzten Wälzlager (37) gebildet ist.

12. Drehgelenk nach Anspruch 11, dadurch gekennzeichnet, daß das Wälzlager (37) in einer in das Getrieberad (19) eingesetzten Bundbuchse (38) angeordnet ist, die eine den Kegelstumpfexzenter (17) umgreifende Kegelbohrung (23) aufweist.

13. Drehgelenk nach Anspruch 1 oder 8, dadurch gekennzeichnet, daß der Zylinderexzenter (16) von einem Wälzkörperkranz (40) spielfrei und axial unverschiebbar umgriffen ist, auf dem das Getrieberad (19) mit seiner Lageraufnahme (20) abgestützt ist.

14. Drehgelenk nach Anspruch 6, dadurch gekennzeichnet, daß die Kegelbohrung (23) in einem gegebenenfalls in die Scheibe (21) eingesetzten Ring (45) aus Kunststoff, Sintermetall od. dgl. angeordnet ist.

15. Drehgelenk nach Anspruch 9, dadurch gekennzeichnet, daß die mit der Kegelbohrung (23) versehene Scheibe als sich mit ihrem Außenumfang (49) in einem Käfig eines mit dem Getrieberad (19) fest verbundenen Aufnahmeringes (47) abstützende Taumelscheibe (48) ausgebildet ist, die in Steigungsrichtung des Kegelstumpfexzenters (17) federnd beaufschlagt ist.

16. Drehgelenk nach Anspruch 15, dadurch gekennzeichnet, daß die Taumelscheibe (48) von einer Kegelstumpffeder (50) in Richtung auf den Kegelstumpfexzenter (17) beaufschlagt ist.

17. Drehgelenk nach Anspruch 9, dadurch gekennzeichnet, daß die den Kegelstumpfexzenter (17) umgreifende Scheibe aus in Steigungsrichtung des Kegelstumpfexzenters federbeaufschlagten, an einem Ringvorsprung (52) des Getrieberades (19) oberseitig abgestützten, eigenbeweglichen Segmentstücken gebildet ist.

18. Drehgelenk nach Anspruch 17, dadurch gekennzeichnet, daß jedes Segmentstück (51') auf einem am Getrieberad (19) angeordneten Kopfbolzen (33) axialverschiebbar und schwenkbar gehaltert ist und von einer sich einerseits am Kopf des Kopfbolzens (33) und andererseits am Segmentstück (51') abstützenden Druckfeder (56) in Steigungsrichtung des Kegelstumpfexzenters (17) beaufschlagt ist.

## Claims

1. A rotary connecting arrangement for seats having an adjustable backrest, wherein two connecting members (10, 11) which are movable relative to each other are connected together by way of a pivot spindle (12) and there is provided an adjusting and locking device which determines the position of the connecting members relative to each other and which in the form of a transmission means and which has an eccentric (17), which eccentric (17) is arranged on the pivot spindle (12) and is in the form of a truncated cone and is surrounded by a tapered bore (23) which is identical to the inclination of the truncated cone and which is associated with a transmission wheel (19), and radial displacement as between the two connecting members (10, 11) can be achieved by an axial movement, which is produced by a force storage means (30), as between the truncated cone (17) and the tapered bore (23), characterised in that beside the truncated cone eccentric (17) the pivot spindle (12) has a cylindrical eccentric (16), the eccentricity of which is somewhat less than the eccentricity of the truncated cone eccentric (17) and the transmission wheel (19) can also be supported with a bearing mounting (20) on the cylindrical eccentric (16).

2. A rotary connecting arrangement according to claim 1 characterised in that the cylindrical eccentric (16) is of a diameter which is adapted to the bearing mounting (20) but which is flattened on the side in opposite relationship to the eccentricity.

3. A rotary connecting arrangement according to claim 1 and/or claim 2 characterised in that the flattening of the cylindrical eccentric (16) on its side in opposite relationship to the eccentric is formed by a circular arc of a greater radius than half its diameter.

4. A rotary connecting arrangement according to one ore more of the preceding claims characterised in that the truncated cone eccentric (17) has its small-diameter circular cross-section directly adjacent to the cylindrical eccentric (16) and on one side has a flush transition between the periphery of the cylindrical eccentric (16) and the rising periphery of the truncated cone eccentric (17) while on the diametrally opposite side the small-diameter circular cross-section of the truncated cone eccentric (17) projects beyond the periphery of the cylindrical eccentric (16).

5. A rotary connecting arrangement according to one or more of the preceding claims characterised in that the tapered bore (23) and the bearing mounting which is in the form of a cylindrical bore (20) in the transmission wheel (19) which surrounds the eccentrics (16, 17) are in fixed association with each other and with the transmission wheel (19).

6. A rotary connecting arrangement according to claim 5 characterised in that the tapered bore (23) is arranged in a disc (21) which is fixedly connected to the transmission wheel (19) which has the cylindrical bore (20).

7. A rotary connecting arrangement according to claim 5 characterised in that the tapered bore (23) is arranged in a collar (22') which is formed on the transmission wheel (19) and which extends the cylindrical bore.

8. A rotary connecting arrangement according to claims 1 to 3 characterised in that the truncated cone eccentric (17) has its large-diameter circular cross-section directly adjacent to the cylindrical eccentric (16), wherein the inclination of the truncated cone eccentric (17), starting from its large-diameter circular cross-section, drops away in a direction away from the cylindrical eccentric (16).

9. A rotary connecting arrangement according to claim 1 and/or claim 8 characterised in that the disc (34) which is provided with the tapered bore (23) is in the form of a component which is separate from the transmission wheel (19), the disc being supported in a radial direction with respect to the transmission wheel (19) and being mounted axially displaceably against a spring (36).

10. A rotary connecting arrangement according to claim 9 characterised in that the disc (34) which is provided with the tapered bore (23) is arranged in axially displaceable, torquetransmitting manner on a plurality of headed pins (33) which are fixed to the transmission wheel (19) and is urged towards the truncated cone eccentric (17) by compression springs (36) which are disposed around the tapered pins (33).

11. A rotary connecting arrangement according to one or more of claims 1 to 3 characterised in that the bearing mounting (20) is formed from a rolling bearing (37) which is fitted into the transmission wheel (19).

12. A rotary connecting arrangement according to claim 11 characterised in that the rolling bearing (37) is arranged in a flanged bush (38) which is fitted into the transmission wheel (19) and which has a tapered bore (23) surrounding the truncated cone eccentric (17).

13. A rotary connecting arrangement according to claim 1 or claim 8 characterised in that the cylindrical eccentric (16) is embraced in a play-free and axially immovable manner by a ring (40) of rolling members, the transmission wheel (19) being supported with its bearing mounting (20) on the ring of rolling members.

14. A rotary connecting arrangement according to claim 6 characterised in that the tapered bore (23) is arranged in a ring (45) of plastics material, sintered metal or the like, which is possibly fitted into the disc (21).

15. A rotary connecting arrangement according to claim 9 characterised in that the disc which is provided with the tapered bore (23) is in the form of a swash plate (48) which is supported with its outside periphery (49) in a cage of a mounting ring (47) which is fixedly connected to the transmission wheel (19), the swash plate being resiliently urged in the direction in which the truncated cone eccentric (17) rises.

16. A rotary connecting arrangement according to claim 15 characterised in that the swash plate (48) is urged towards the truncated cone eccentric (17) by a frustoconical spring (50).

17. A rotary connecting arrangement according to claim 9 characterised in that the disc which surrounds the truncated cone eccentric (17) is formed from segment portions which are movable on their own and which are spring-loaded in the direction in which the truncated cone eccentric rises and which are supported at an annular projection (52) on the transmission wheel (19) at the top side thereof.

18. A rotary connecting arrangement according to claim 17 characterised in that each segment portion (51') is mounted axially displaceably and pivotably on a headed pin (33) arranged on the transmission wheel (19), and is urged in the direction in which the truncated cone eccentric (17) rises by a compression spring (56) which is supported at one end against the head of the headed pin (33) and at the other end against the segment portion (51').

## Revendications

1. Articulation tournante pour sièges à dossier réglable, dans laquelle deux parties d'articulation (10, 11), mobiles l'une par rapport à l'autre, sont reliées entre elles par l'intermédiaire d'un axe de pivotement (12), et un dispositif de réglage et de blocage, réalisé sous la forme d'une transmission, déterminant la position des parties d'articulation l'une part rapport à l'autre, est prévu et présente un excentrique (17) disposé sur l'axe de pivotement (12) et en forme de tronc de cône qui est entouré d'un alésage conique (23), appartenant à une roue de transmission (19), coïncidant avec la pente du tronc de cône, un déplacement radial entre les deux parties d'articulation (10, 11) réalisable, entre le tronc de cône (17) et l'alésage conique (23), par un déplacement axial déclenché par un accumulateur d'énergie (30), caractérisé en ce que l'axe de pivotement (12) présente, à côté de l'excentrique tronconique (17), un excentrique cylindrique (16), dont l'excentricité est un peu plus petite que l'excentricité de l'excentrique tronconique (17), et en ce que la roue de transmission (19) comportant un logement de palier (20) est également susceptible d'être soutenue sur l'excentrique cylindrique (16).

2. Articulation tournante selon la revendication 1, caractérisée en ce que l'excentrique cylindrique (16) présente un diamètre adapté au logement de palier (20), qui est cependant aplati sur le côté faisant face à l'excentricité.

3. Articulation tournante selon la revendication 1 et/ou 2, caractérisée en ce que l'aplatissement de l'excentrique cylindrique (16) est constitué, sur le côté opposé à l'excentricité, d'un arc de cercle dont le rayon est plus grand que son demi-diamètre.

4. Articulation tournante selon une ou plusieurs des revendications précédentes, caractérisée en ce que l'excentrique tronconique (17), est directement voisin de l'excentrique cylindrique par son secteur circulaire de petit diamètre et présente, sur un côté, une transition raccordée entre le périmètre de l'excentrique cylindrique (16) et le périmètre croissant de l'excentrique tronconique (17), alors qu'il dépasse le périmètre de l'excentrique cylindrique (16) sur le côté diamétralement opposé du secteur circulaire de petit diamètre de l'excentrique tronconique (17).

5. Articulation tournante selon une ou plusieurs des revendications précédentes, caractérisée en ce que l'alésage conique (23) et la roue de transmission (19) entourant le logement de palier, réalisé sous la forme d'un alésage cylindrique (20), dans les excentriques (16, 17), restent liés rigidement entre eux et par rapport à la roue de transmission (19).

6. Articulation tournante selon la revendication 5, caractérisée en ce que l'alésage conique (23) est disposé dans un disque (21) relié rigidement à la roue de transmission (19) présentant l'alésage cylindrique (20).

7. Articulation tournante selon la revendication 5, caractérisée en ce que l'alésage conique (23) est disposé dans un collet (22') prolongeant l'alésage cylindrique, formé sur la roue de transmission (19).

8. Articulation tournante selon les revendications 1 à 3, caractérisée en ce que l'excentrique tronconique (17), avec sa section transversale circulaire de grand diamètre, est placé à proximité immédiate de l'excentrique cylindrique (16), la pente de l'excentrique tronconique (17) se réduisant lorsqu'on s'éloigne de la section transversale circulaire (16) de grand diamètre de l'excentrique cylindrique (16).

9. Articulation tournante selon la revendication 1 et/ou 8, caractérisée en ce que le disque (34) pourvu d'un alésage conique (23) est réalisé sous la forme d'un composant séparé de la roue de transmission (19), qui est soutenu en direction radiale par rapport à la roue de transmission (19) et monté axialement mobile, à l'encontre d'un ressort (36).

10. Articulation tournante selon la revendication 9, caractérisée en ce que le disque (34) pourvu de l'alésage conique (23) est disposé, mobile axialement et en transmettant un couple de rotation, sur plusieurs boulons à tête (33) fixés sur la roue de transmission (19), et est sollicité, en direction de l'excentrique tronconique (17) de section croissante, par des ressorts de compression (36) entourant les boulons à tête (33).

11. Articulation tournante selon une ou plusieurs des revendications 1 à 3, caractérisée en ce que le logement de palier (20) est formé d'un palier à roulement (37) inséré dans la roue de transmission (19).

12. Articulation tournante selon la revendication 11, caractérisée en ce que le palier à roulement (37) est disposé dans une douille à collet (38) insérée dans la roue de transmission (19) et présentant un alésage conique (23) entourant l'excentrique tronconique (17).

13. Articulation tournante selon la revendication 1 ou 8, caractérisée en ce que l'excentrique cylindrique (16) est entouré, sans jeu et en blocage axial, d'une couronne d'éléments de roulement (40), sur laquelle s'appuie la roue de transmission (19) avec son logement de palier (20).

14. Articulation tournante selon la revendication 6, caractérisée en ce que l'alésage conique (23) est disposé dans un anneau (45) inséré, le cas échéant, dans le disque (21) en matière plastique, métal fritté, ou similaire.

15. Articulation tournante selon la revendication 9, caractérisée en ce que le disque pourvu de l'alésage conique (23) est réalisé sous la forme d'un disque oscillant (48), s'appuyant par son périmètre extérieur (49) dans une cage d'une bague de réception (47) reliée rigidement à la roue de transmission (19), le disque (48) étant sollicité élastiquement dans le sens de la pente de l'excentrique tronconique (17).

16. Articulation tournante selon la revendication 15, caractérisée en ce que le disque oscillant (48) est sollicité par un ressort spiroconique (50) en direction de l'excentrique tronconique (17).

17. Articulation tournante selon la revendication 9, caractérisée en ce que le disque entourant l'excentrique tronconique (17) est formé de parties de segment, mobiles intrinsèquement, soutenues, sur le côté supérieur, sur une saillie annulaire (52) de la roue de transmission (19), et sollicitées élastiquement dans le sens de la pente de l'excentrique tronconique.

18. Articulation tournante selon la revendication 17, caractérisée en ce que chaque partie de segment (51') est maintenue, de façon pivotante et mobile axialement, sur un boulon à tête (33) disposé sur la roue de transmission (19), et est sollicitée par un ressort de pression (56) s'appuyant d'une part sur la tête du boulon à tête (33) et, d'autre part, sur la partie de segment (51'), dans le sens de la pente de l'excentrique tronconique (17).

FIG.1

FIG.2

FIG.3

# FIG. 4

# FIG. 5

EP 0 207 182 B1

FIG.7

FIG.6

FIG.8

FIG.9

EP 0 207 182 B1

FIG.10

FIG.13

FIG.12

FIG.11